(19) **Europäisches Patentamt / European Patent Office / Office européen des brevets**

(11) **EP 1 630 463 B1**

(12) **EUROPEAN PATENT SPECIFICATION**

(45) Date of publication and mention
of the grant of the patent:
**14.11.2007 Bulletin 2007/46**

(51) Int Cl.:
*F16J 15/34* *(2006.01)*    *F04D 29/12* *(2006.01)*

(21) Application number: **05017981.1**

(22) Date of filing: **18.08.2005**

(54) **Mechanical seal device**

Gleitringdichtung

Joint d'étanchéité mécanique

(84) Designated Contracting States:
**DE**

(30) Priority: **19.08.2004 JP 2004240049**

(43) Date of publication of application:
**01.03.2006 Bulletin 2006/09**

(73) Proprietor: **EAGLE INDUSTRY Co., Ltd.**
**Tokyo 105-8587 (JP)**

(72) Inventors:
• **Murakami, Yasuhiro,**
**Eagle Industry co., Ltd**
**Minato-ku**
**Tokyo 105-8587 (JP)**

• **Kiryu, Kenji,**
**Eagle Industry co., Ltd**
**Minato-ku**
**Tokyo 105-8587 (JP)**
• **Kametaka, Koji,**
**Eagle Industry co., Ltd**
**Minato-ku**
**Tokyo 105-8587 (JP)**

(74) Representative: **Wiebusch, Manfred**
**TER MEER STEINMEISTER & PARTNER GbR,**
**Patentanwälte,**
**Artur-Ladebeck-Strasse 51**
**33617 Bielefeld (DE)**

(56) References cited:
**EP-A- 0 500 447**      **US-A- 5 707 065**
**US-A1- 2002 074 728**      **US-A1- 2002 074 744**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of the Invention

The present invention relates to a mechanical seal device for a water pump mounted in an automobile etc. or other general use pump, more particularly relates to a mechanical seal device superior in durability and dry running wear resistance, preventing seizing or wear of a seal sliding element, and effectively suppressing squeaking during sliding.

2. Description of the Related Art

In general, carbon sliding elements are widely being used as seal rings for mechanical seals etc. for sealing in fluids. These carbon sliding elements have suitable relief shapes on the sliding face in addition to solid lubricity, so can hold a liquid film formed by the sealed fluid with the seal sliding face of the facing sliding elements and therefore can exhibit superior lubrication characteristics.

However, if using a mechanical seal under conditions with large amounts of impurities present, the carbon sliding element will be roughened at its surface and become worn due to the impurities whereby the sealing function will become impaired leading to leakage of the sealed fluid in some cases. Further, if using a sealed fluid with a high silicate concentration, the silicate will end up precipitating and depositing between the sliding faces and similarly the sealing function will become impaired leaking to leakage of the sealed fluid in some cases.

To deal with these problems, sometimes a mechanical seal is used which employs a hard material such as silicon carbide as a high hardness, high strength material instead of a carbon sliding elements and which combines this with a facing sliding material comprised of a hard material such as silicon carbide in which pores are dispersed. However, such a mechanical seal has the following problems.

First, silicon carbide is extremely hard and superior in wear resistance, but is poor in self-lubricity. If silicon carbide elements are combined and slid against each other under high load conditions, the sliding faces will immediately end up being polished to mirror faces. Therefore, when stopping sliding and the lubrication film between the sliding faces is broken, the mirror polished seal sliding faces will stick, the coefficient of friction at the time of starting a sliding action will abnormally rise, and seizing will sometimes occur. Further, silicon carbide is poor in self-lubricity, so the sliding faces will stick at the time of sliding, a stick-slip phenomenon will occur, and squeaking will end up occurring at the time of sliding. Due to this squeaking, the sliding faces will become a source of vibration and will end up causing vibration of the pump as a whole. Further, if the squeaking continues, it will sometimes cause abnormal wear.

Further, it is possible to disperse pores in a silicon carbide substrate so as to cause the sealed fluid to penetrate the sliding face and generate a liquid storing effect or hydrodynamic effect at the time of sliding and thereby reduce abnormal sliding torque or seizing (for example, see Japanese Patent Publication (B) No. 5-69066). However, if for some sort of reason, even for a short time, a condition occurs where no sealed fluid is present near the seal sliding faces or at the time of startup or stopping where the seal sliding faces moving relative to each other cannot be expected to exhibit a liquid lubrication state, the sliding faces will end up in solid contact and a similar condition as the above will end up occurring.

If such a solid contact condition occurs, rapid heat of friction will be generated, the rubber packing and other secondary sealing parts will be damaged by the heat, and the sealing function will be unable to be held stably, the substances dissolved in the sealed fluid will precipitate and deposit between the sliding faces, and the sealing function will be unable to be held stably in some cases.

[0007a] Seal devices according to the preamble of claim 1 are disclosed in US-A-5 707 065, US 2002/074744 A1 and US 2002/074728 A1.

SUMMARY OF THE INVENTION

The present invention was made in consideration of the above problems and has as its object the provision of a mechanical seal device superior in durability and dry seizure resistance, preventing seizing or wear of the seal sliding elements, and effectively suppressing squeaking at the time of sliding.

The inventors discovered that the object can be achieved by using as one seal sliding element a seal sliding element having silicon carbide as a substrate and containing carbon and using as the other (facing) seal sliding element a porous seal sliding element containing silicon carbide as its main ingredient and thereby completed the present invention.

That is, the mechanical seal device of the present invention is a mechanical seal device for sealing a fluid by bringing a first seal sliding element and a second seal sliding element into abutment, wherein the first seal sliding element is a seal sliding element having silicon carbide as a substrate and containing carbon and the second seal sliding element is a seal sliding element containing silicon carbide as its main ingredient and having 5 to 200 $\mu$m size pores independently dispersed in it.

In the present invention, by using as the first seal sliding element a sliding element comprised of a silicon carbide substrate (ordinary pressure sintered SiC containing Si) into which carbon is introduced, it becomes possible to improve the self-lubricity and prevent the occurrence of squeaking at the time of sliding. Therefore, due to the effect of improvement of the self-lubricity, it is possible to effectively prevent the seizing of the seal sliding elements and squeaking at the time of sliding which became problems when using sliding elements containing only silicon carbide.

Further, in the present invention, as the first seal sliding element a sliding element comprised of a silicon carbide substrate into which carbon is introduced and as the other seal sliding element (second seal sliding element) a porous seal sliding element containing silicon carbide as its main ingredient are used. For this reason, it is possible to obtain an effect of improvement of the self-lubricity and effect of prevention of squeaking and to achieve an improvement in the durability and wear resistance.

Note that one of the first seal sliding element and the second seal sliding element should be a rotating sliding element and the other a stationary sliding element. That is, for example, the first seal sliding element may be made a rotating sliding element and the second seal sliding element a stationary sliding element or vice-versa.

The carbon is contained in the first seal sliding element in the state dispersed in the silicon carbide substrate. By having the carbon efficiently dispersed in the first seal sliding element, the effect of addition of carbon can be further raised.

Preferably, the first seal sliding element has an area ratio of carbon of preferably 0.4 to 80%, more preferably 1 to 10% and a content of carbon of preferably 0.1 to 30 wt%, more preferably 0.2 to 5 wt% with respect to the first seal sliding element as a whole.

By making the area ratio or content of carbon the above range, improvement of the self-lubricity by the addition of carbon can be realized without detracting from the advantages of silicon carbide. Note that in the present invention, the "area ratio of carbon" means the ratio of presence of the carbon ingredient at the surface or any cross-section of the seal sliding element expressed as an area ratio.

The carbon is not particularly limited, but for example graphite (artificial graphite or natural graphite) and other graphitic carbon, carbon black, a phenolic resin, epoxy resin, etc. carburized to form resin charcoal, charcoals and other carbonaceous materials etc. may be mentioned. Use of one or more of these is preferable. In particular, in the present invention, graphite (artificial graphite or natural graphite) and other graphitic carbon are suitably used. Including these as the main ingredient is preferable.

The first seal sliding element has a Vicker's hardness, for maintaining strength as a sliding material, of preferably 300 to 3000, more preferably 600 or more. Further, in the present invention, the first seal sliding element has an apparent specific gravity of preferably 2.0 to 3.2.

The shape of the pores contained in the second seal sliding element is preferably spherical. Further, the average size of the pores is preferably 10 to 70 $\mu$m, and the porosity of the pores is preferably 3 to 20 vol%, more preferably 4 to 8 vol%.

In the present invention, by controlling the pores contained in the second seal sliding element to the above range, it is possible to improve the wear resistance and durability and to impart lubricity. Note that the "pore area ratio" means the ratio of presence of pores at the surface or any cross-section of the seal sliding element expressed in area ratio.

Preferably, the second seal sliding element has a Vicker's hardness, for maintaining strength as a sliding material, of preferably 2000 to 3000, more preferably 2200 or more. Further, in the present invention, the second seal sliding element has an apparent specific gravity of preferably 2.7 to 3.2.

The applications of the mechanical seal of the present invention are not particularly limited, for example it may be used for a water pump etc. mounted in an automobile etc. Further, in the mechanical seal of the present invention, the sealed fluid used is not particularly limited. For example, water, a mixed liquid of water and ethylene glycol known as a "long life coolant (LLC)", or other water-based sealed fluid may be suitably used. Normally, when using water as the sealed fluid, squeaking tends to particularly easily occur at the time of sliding. However, according to the present invention, even if using water, squeaking at the time of sliding can be effectively suppressed.

According to the present invention, by using as one seal sliding element a seal sliding element having silicon carbide as a substrate and containing carbon and using as the other (facing) seal sliding element a porous seal sliding element containing silicon carbide as its main ingredient, it is possible to provide a mechanical seal device superior in durability and dry running wear resistance, prevent seizing or wear of the seal sliding element, and effectively suppress squeaking at the time of sliding.

**BRIEF DESCRIPTION OF THE DRAWINGS**

Below, embodiments of the present invention will be explained in detail with reference to the drawings, in which:

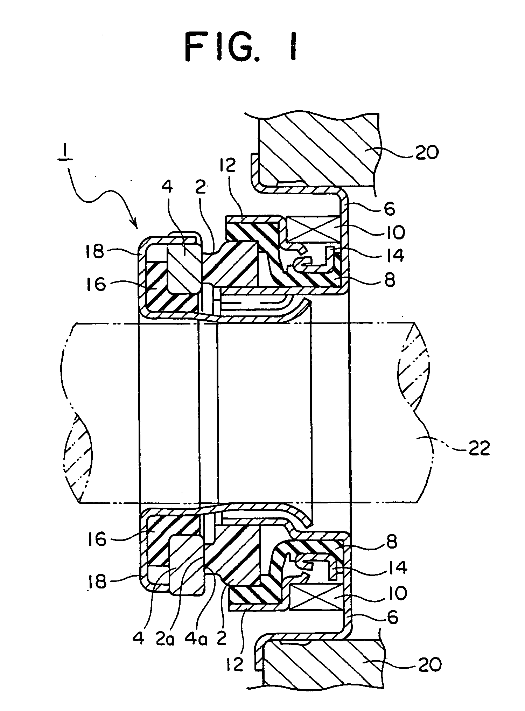

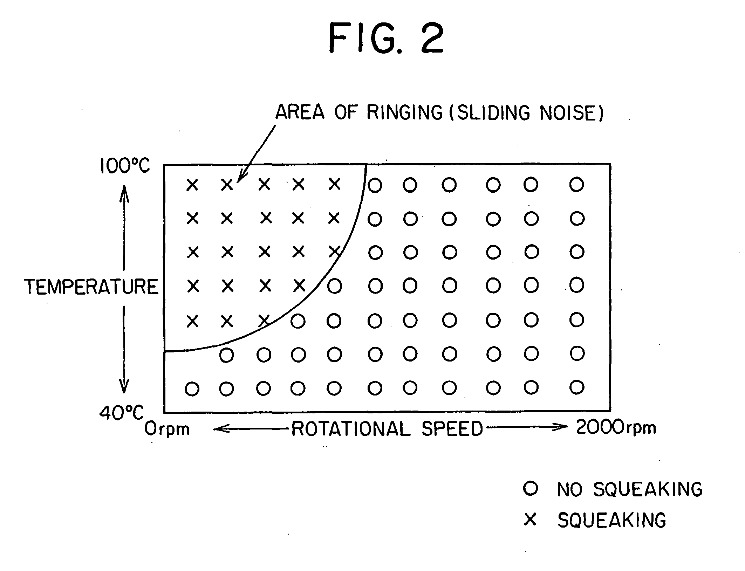

FIG. 1 is a cross-sectional view of a mechanical seal device according to an embodiment of the present invention, and FIG. 2 is a view for explaining a squeaking test of the examples of the present invention.

**DESCRIPTION OF THE PREFERRED EMBODIMENTS**

As shown in FIG. 1, the mechanical seal device 1 of the present embodiment is arranged between a seal housing 20 and a shaft 22. This mechanical seal device 1 is comprised of a stationary ring constituted by a seal ring 2 and a rotating ring constituted by a mating ring 4 combined together via their sliding faces 2a and 4a. These sliding faces function as seal faces and rotating contact faces. The seal ring 2 is attached to the seal housing 20 through a cartridge 6. The mating ring 4 is attached to the shaft 22 through a support member 18.

The stationary ring constituted by the seal ring 2 is pressed into contact against the sliding face 4a of the mating ring 4 through its sliding face 2a by being pressed against by the elasticity of a spring 10 through a bellows 8. Note that the bellows 8 is fixed in place by a first mount 12 and second mount 14. Further, the spring 10 is held between the first mount 12 and the cartridge 6.

On the other hand, the rotating ring constituted by the mating ring 4 is pressed into contact with the sliding face 2a of the seal ring 2 through the sliding face 4a and is attached to the support member 18 through the gasket 16 and thereby can rotate freely along with the shaft 22.

In the present embodiment, as the seal ring 2 a seal sliding element having silicon carbide as a substrate is used and as the mating ring 4 a porous seal sliding element containing silicon carbide as its main ingredient is used. Below, the seal ring 2 and mating ring 4 will be explained.

Seal Ring 2

The seal ring 2 is comprised of a seal sliding element having silicon carbide as a substrate and containing carbon in a state dispersed in the silicon carbide substrate. That is, the seal ring 2 of the present embodiment is comprised of a seal sliding element comprised of silicon carbide crystals into which carbon is dispersed.

The carbon dispersed in the silicon carbide crystals is not particularly limited. For example, graphite (artificial graphite or natural graphite) and other graphitic carbon, carbon black, a phenolic resin, epoxy resin, etc. carburized to obtain resin charcoal, charcoal, and other carbonaceous materials etc. may be mentioned. These are preferably used alone or in combinations of two or more types. In particular, in the present embodiment, inclusion of graphite (artificial graphite or natural graphite) and other graphitic carbon as the main ingredient is preferable.

The seal ring 2 contains the carbon to an area ratio of preferably 0.4 to 80%, more preferably 1 to 10%. Further, the carbon is contained in an amount with respect to the seal ring 2 as a whole of preferably 0.1 to 30 wt%, more preferably 0.2 to 5 wt%.

By making the area ratio or content of carbon the above ranges, an improvement of the self-lubricity due to the addition of carbon can be realized without detracting from the advantages offered by silicon carbide. If the area ratio or content of carbon is too low, the effect of addition of carbon will not be manifested, the self-lubricity will become insufficient, the dry running wear resistance will end up becoming poor, and seizing tends to easily occur. On the other hand, if too great, wear will end up advancing and poor durability will tend to result.

In the present embodiment, by making the amount of addition of carbon that range, the Vicker's hardness of the seal ring 2 can be made preferably 300 to 3000, more preferably 600 or more, and the apparent specific gravity of the seal ring 2 can be made preferably 2.0 to 3.2. If the seal ring 2 is too low in Vicker's hardness, wear becomes serious and the durability tends to become poor as a result. Further, if too high in apparent specific gravity, the reduction of weight of the seal itself ends up becoming obstructed.

The method of production of the seal ring 2 of the present embodiment is not particularly limited. For example, the following method may be used for production. First, silicon carbide crystal powder, carbon powder, various binder resins, and, in accordance with need, a sintering aid are mixed with a water-soluble solvent etc. using a ball mill etc. Next, the obtained mixture is formed into granules using a spray dryer etc. and the obtained granules are formed into a desired shape. The obtained shaped article is then fired to produce the seal ring 2.

Mating Ring 4

The mating ring 4 is comprised of a seal sliding element containing silicon carbide as its main ingredient and having 5 to 200 $\mu$m size pores independently dispersed in it.

The pores have an average size of preferably 10 to 70 $\mu$m. If the average size of the pores is too small or too large, the effect of provision of the pores tends to be no longer sufficiently obtained.

Further, the porosity of the pores is preferably 3 to 20 vol%, more preferably 4 to 8 vol%. If the pore area ratio of the pores is too small, the effect of provision of the pores tends to be no longer sufficiently obtained, while if too large, the durability and wear resistance tend to drop.

In the present embodiment, by controlling the pores formed in the silicon carbide to the above range, it is possible to improve the wear resistance and durability and impart lubricity.

Further, in the present embodiment, by making the pores formed in the silicon carbide this range, it is possible to make the Vicker's hardness of the mating ring 4 preferably 2000 to 3000, more preferably 2200 or more, and make the apparent specific gravity of the mating ring 4 preferably 2.7 to 3.2. If the mating ring 4 is too low in Vicker's hardness, the wear becomes serious and the durability tends to become poor as a result.

The method of production of the mating ring 4 is not particularly limited, but for example the following method etc. may be mentioned. First, silicon carbide crystal powder and various binder resins and, in accordance with need, other compounds are prepared and mixed using a water-based solvent. This mixed solution is formed into granules using a spray dryer etc. and these granules are mixed with a predetermined amount of resin granules having an average grain size of 40 to 60 $\mu$m or so. This mixed powder is formed into a desired shape and that shaped article is fired in vacuum or an inert atmosphere to carburize the binder resin and at the same time thermally break up and disperse the 40 to 60 $\mu$m or so resin granules to form pores. After this, the shaped article continues to be fired at a predetermined temperature to obtain a mating ring 4 comprised of porous silicon carbide.

In the present embodiment, as the seal ring 2 a sliding element comprised of a silicon carbide substrate and containing carbon is used, therefore the self-lubricity of the sliding face 2a can be improved and seizing of the sliding face or squeaking at the time of sliding can be effectively prevented. Further, in the present embodiment, not only as the seal ring 2 a sliding element comprised of silicon carbide substrate and containing carbon is used, but also as the mating ring 4 a porous seal sliding element comprised of silicon carbide as its main ingredient is used. Therefore, along with the effect to improve the self-lubricity, improvement of the durability and wear resistance can be achieved.

Note that the present invention is not limited to the above embodiment and can be modified in various ways within the range of the present invention. For example, in the above embodiment, as the seal ring 2 a sliding element comprised of a silicon carbide substrate into which carbon is introduced and as the mating ring 4 a porous sliding element comprised of silicon carbide as its main ingredient are used, but the reverse sliding elements may also be used. That is, it is also possible to use as the seal ring 2 a porous sliding element comprised of silicon carbide as its main ingredient and use as the mating ring 4 a sliding element comprised of a silicon carbide substrate into which carbon is introduced.

Examples

Below, the present invention will be explained based on further detailed examples, but the present invention is not limited to these examples.

Example 1

In Example 1, as the seal ring 2 a sliding element comprised of a silicon carbide substrate into which carbon is dispersed and as the mating ring 4 a sliding element comprised of silicon carbide having independently dispersed pores are used so as to construct the mechanical seal 1 shown in FIG. 1.

First, to produce a seal ring 2 comprised of a graphite dispersed silicon carbide, an $\alpha$-type silicon carbide crystal powder of average grain size 0.7 $\mu$m was prepared in an amount of 92.5 wt%, graphite in an amount of 4 wt%, a shaping binder constituted by a phenolic resin in an amount of 2 wt%, and a sintering aid constituted by borocarbide powder in an amount of 0.5 wt%. Next, water was added to these, the result was mixed by a ball mill, then a spray dryer was used for spray drying so as to produce granules (granulation). These were cold pressed at a shaping facial pressure of 1000 kg/cm$^2$ to shape them into the seal ring shape shown in FIG. 1. Further, the shaped article was heat treated in an argon atmosphere under conditions of 800°C for 12 hours and finally sintered under conditions of 2140°C for 1 hour so as to prepare a seal ring 2 comprised of a sliding element comprised of a silicon carbide substrate into which graphite is dispersed.

Next, the obtained seal ring 2 was measured for Vicker's hardness, apparent specific gravity, and area ratio of carbon (carbon dispersion rate). The results of the measurement were a Vicker's hardness of 2350, an apparent specific gravity of 3.15, and an area ratio of carbon of 1%.

Next, as the mating ring 4 serving as the facing sliding material, a porous mating ring 4 exhibiting a dense structure and comprised of a silicon carbide substrate sintered at ordinary temperature was prepared. The silicon carbide mating ring 4 used was one with a Vicker's hardness of 2550, an apparent specific gravity of 3.04, a pore average size of 65 $\mu$m, and a pore area ratio of 4%.

Comparative Example 1

Except for using as the seal ring 2 a sliding element comprised of soft carbon, the same procedure was followed as in Example 1 to produce the mechanical seal 1 shown in FIG. 1. That is, in Comparative Example 1, a mechanical seal 1 comprised of a soft carbon seal ring 2 and a silicon carbide mating ring 4 was produced.

The soft carbon seal ring 2 used was one having a Vicker's hardness of 90 and an apparent specific gravity of 1.60.

Comparative Example 2

Except for using as the seal ring 2 a sliding element comprised of silicon carbide having independently dispersed pores, the same procedure was followed as in Example 1 to produce the mechanical seal 1 shown in FIG. 1. That is, in Comparative Example 2, a mechanical seal 1 comprised of a silicon carbide seal ring 2 and a silicon carbide mating ring 4 was produced.

Comparative Example 3

Except for using as the mating ring 4 a sliding element comprised of a silicon carbide substrate into which graphite is dispersed, the same procedure was followed as in Example 1 to produce the mechanical seal 1 shown in FIG. 1. That is, in Comparative Example 3, a mechanical seal 1 comprised of a graphite dispersed silicon carbide seal ring 2 and a graphite dispersed silicon carbide mating ring 4 was produced.

Evaluation of Mechanical seal

The mechanical seals of Example 1 and Comparative Examples 1 to 3 produced above were subjected to a silicate deposition resistance test, impurities surface roughening resistance test, squeaking test, and drying resistance test.

Silicate Deposition Resistance Test

The silicate deposition resistance test is a test for evaluating the resistance to the phenomenon of the precipitation and deposition of the Ca, P, Si, and other dissolved ingredients introduced into an LLC for the purpose of preventing rust. If the dissolved ingredients end up precipitating and depositing on the seal ring or the mating ring, each ring will become worn and leakage of the LLC will end up occurring.

The silicate deposition resistance test was performed by a mechanical seal test system using as the sealed fluid an LLC 50% aqueous solution and under the conditions of a test temperature of 110°C, a test time of 1000 hours, and a fluid sealing pressure of 0.1 MPa while alternately changing the rotational speed between a speed of 600 min$^{-1}$ for 8 seconds and a speed of 6710 min$^{-1}$ for 4 seconds. Each sample was evaluated by measuring the amount of leakage of the LLC after 1000 hours. The smaller the amount of leakage of the LLC, the better. The results are shown in Table 1. Further, Example 1 was tested under a low load and a high load condition. The results are shown in Table 2.

Table 1

| | Seal ring | Mating ring | Load [N] | Amount of leakage of LLC [ml] |
|---|---|---|---|---|
| Example 1 | Graphite dispersed silicon carbide | Porous silicon carbide | 26.0 | 10.0 |
| Comp. Ex. 1 | Soft carbon | Porous silicon carbide | 26.0 | 76.0 |
| Comp. Ex. 2 | Porous silicon carbide | Porous silicon carbide | 28.8 | 13.2 |
| Comp. Ex. 3 | Graphite dispersed silicon carbide | Graphite dispersed silicon carbide | 26.0 | 18.0 |

Table 2

| | | Load [N] | Amount of leakage of LLC [ml] |
|---|---|---|---|
| Example 1 | Low load | 26.0 | 10.0 |
| Example 1 | High load | 19.6 | 2.0 |

From Table 1, the mechanical seal of Example 1 using a graphite (carbon) dispersed silicon carbide seal ring and a porous silicon carbide mating ring had an amount of leakage of LLC after 1000 hours of a low 10.0 ml - a good result. Further, the mechanical seal of Example 1 exhibited a good sealability even after the end of the test. No Si or other deposits could be observed.

Further, from Table 2, it was confirmed that the mechanical seal of Example 1 had little leakage of LLC after 1000 hours - a good result - even when changing the load of the seal.

On the other hand, Comparative Examples 1 and 2 using as the seal ring soft carbon or porous silicon carbide and Comparative Example 3 using as the seal ring and mating ring graphite (carbon) dispersed silicon carbide had amounts of leakage of LLC after 1000 hours, from Table 1, of 76.0 ml, 13.2 ml, and 18.0 ml or large amounts of leakage.

Impurities Surface Roughening Resistance Test

(Impurities Wear Resistance Test)

The impurities surface roughening resistance test is a test mixing impurities into the LLC and evaluating the wear resistance of the mechanical seal at the time of such mixture. The impurities surface roughening resistance test was performed by a mechanical seal test system using as the sealed fluid an LLC 50% aqueous solution into which impurities were mixed under conditions of a test temperature of 90°C, a test time of 50 hours, a fluid sealing pressure of 0.1 MPa, and a rotational speed of 8000 min$^{-1}$. In the test, as the impurities, JIS Z8901 "Test Use Powder and Test Use Particles" Type 3 and Type 8 were added in amounts of 2.8 g and casting sand (#80 to 100) was added in an amount of 2.8 g with respect to 1000 g of the LLC. Note that JIS Z8901 Type 3 and Type 8 are test use particles with median sizes based on weight (50% size) of 6.6 to 8.6 $\mu$m. Each sample was evaluated by measuring the amount of leakage of LLC after 50 hours. The smaller the amount of leakage of LLC, the better. The results are shown in Table 3.

Table 3

| | Seal ring | Mating ring | Load [N] | Amount of leakage of LLC [ml] |
|---|---|---|---|---|
| Example 1 | Graphite dispersed silicon carbide | Porous silicon carbide | 23.0 | 0.2 |
| Comp. Ex. 1 | Soft carbon | Porous silicon carbide | 25.8 | 50.0 |
| Comp. Ex. 2 | Porous silicon carbide | Porous silicon carbide | 26.7 | 6.0 |
| Comp. Ex. 3 | Graphite dispersed silicon carbide | Graphite dispersed silicon carbide | 26.0 | 5.0 |

From Table 3, the mechanical seal of Example 1 using a graphite (carbon) dispersed silicon carbide seal ring and a porous silicon carbide mating ring had an amount of leakage of LLC after 50 hours of a small 0.2 ml - a good result. Further, the mechanical seal of Example 1 exhibited a good sealability even after the end of the test and had a good sliding face shape as well.

On the other hand, Comparative Examples 1 and 2 using as the seal ring soft carbon or porous silicon carbide and Comparative Example 3 using as the seal ring and mating ring graphite (carbon) dispersed silicon carbide had amounts of leakage of LLC after 50 hours of 50.0 ml, 6.0 ml, and 5.0 ml or large amounts of leakage. Note that it was confirmed that Comparative Example 1 using porous hard carbon as the seal ring had no major problems, but suffered from serious wear and roughening at the sliding face and therefore the durability was poor.

Squeaking Test

The squeaking test was performed by investigating any squeaking under the each test conditions when changing the rotational speed and the measurement temperature.

The squeaking test was performed by a squeaking test system (test system attaching mechanical seal device in liquid tank and measuring accumulation of liquid leaked from seal face at bottom tank) using as a sealed fluid a LLC 50% aqueous solution or water and under conditions of a fluid pressure of 0 MPa (atmospheric pressure) and use of a rotation shaft of a diameter of $\phi$6 as the test shaft. Note that the measurement was performed, as shown in FIG. 2, under each conditions of rotational speed of 0 to 2000 min$^{-1}$ and under each conditions of measurement temperature of 40 to 100°C.

Each sample was evaluated by calculating the squeaking rate by the following equation (1) from the ratio of the squeaking points (AR: Area of Ringing(sliding noise) to all measurement points (AT: Area of Test). That is, the lower the squeaking rate, the broader the range of rotational speed and temperature where squeaking is suppressed, while the higher the squeaking rate, the more easily squeaking occurs according to the rotational speed and temperature. Note that as shown in FIG. 2, squeaking tended to occur more easily in particular under conditions of a low rotational speed and high temperature. Note that in the examples, the squeaking test was performed using similar measurement points and similar conditions for all samples.

$$\text{Squeaking rate (\%) = Squeaking points (AR)/all}$$

$$\text{measurement points (AT) x 100 (1)}$$

The lower the squeaking rate, the better. The results are shown in Table 4.

Table 4

| | Seal ring | Mating ring | Squeaking rate [%] | |
| --- | --- | --- | --- | --- |
| | | | LLC 50% aqueous solution | Water |
| Example 1 | Graphite dispersed silicon carbide | Porous silicon carbide | 0 | 5.4 |
| Comp. Ex. 1 | Soft carbon | Porous silicon carbide | 0 | 5.4 |
| Comp. Ex. 2 | Porous silicon carbide | Porous silicon carbide | 0 | 10.0 |
| Comp. Ex. 3 | Graphite dispersed silicon carbide | Graphite dispersed silicon carbide | 16.4 | 36.7 |

From Table 4, it could be confirmed that the mechanical seal of Example 1 using a graphite (carbon) dispersed silicon carbide seal ring and a porous silicon carbide mating ring had a low squeaking rate both when using LLC and water and could be suppressed in squeaking over a wide range of rotational speed and temperature.

On the other hand, it could be confirmed that Comparative Example 2 using as the seal ring porous silicon carbide and Comparative Example 3 using as the seal ring and mating ring a graphite (carbon) dispersed silicon carbide had squeaking rates of 10.0% and 36.7%, that is, easy squeaking, in particular when using water as the sealed fluid. These samples tended to be more susceptible to squeaking in particular under low speed and high temperature conditions. Note that in Comparative Example 1 using as the seal ring soft carbon, the squeaking rate was about the same as that of Example 1.

Drying Resistance Test

The drying resistance test is a test conducting a sliding test without use of a sealed fluid and measuring the time until seizing occurred. By improving the drying resistance, it is possible to effectively prevent seizing of the seal even when the phenomenon of adhesion due to solid contact of the seal sliding faces occurs.

The drying resistance test was performed by a mechanical seal test system in an air (dry) atmosphere at atmospheric pressure under conditions of a test time of 10 minutes and a rotational speed of 2000 $\text{min}^{-1}$. Each sample was evaluated by evaluating the time from the test start to when the seal seized up (seizing time). The seizing time is preferably long. The results are shown in Table 5.

Table 5

| | Seal ring | Mating ring | Load [N] | Seizing time [min.] |
| --- | --- | --- | --- | --- |
| Example 1 | Graphite dispersed silicon carbide | Porous silicon carbide | 24.6 | 9.0 |
| Comp. Ex. 1 | Soft carbon | Porous silicon Porous silicon | 25.0 | No seizing |
| Comp. Ex. 2 | Porous silicon carbide | Porous silicon carbide | 24.6 | 1.5 |

(continued)

|  | Seal ring | Mating ring | Load [N] | Seizing time [min.] |
|---|---|---|---|---|
| Comp. Ex. 3 | Graphite dispersed silicon carbide | Graphite dispersed silicon carbide | 25.0 | 12.0 |

From Table 5, in Example 1 and Comparative Example 2 using as both the seal ring and mating ring materials having a high hardness, while Comparative Example 2 which had a seizing time of 1.5 minute, Example 1 had a seizing time of 9 minutes. It could be confirmed that Example 1 had a longer time until seizing and was superior in drying resistance. Note that in Example 1, after the elapse of 5 minutes from the test start, no damage to the sliding faces could be confirmed. Further, since Comparative Example 1 used as the seal ring a soft material, seizing did not occur.

Overall Evaluation

Table 6 shows the results of a silicate deposition resistance test, impurities surface roughening resistance test, squeaking test, and drying resistance test for the mechanical seals of Example 1 and Comparative Examples 1 to 3. In the table, "G (good)" shows good results could be obtained, while "P (poor)" shows good results could not be obtained.

Table 6

|  | Seal ring | Mating ring | Silicate deposition resistance test | Impurities surface roughness test | Squeaking test | Drying resistance test |
|---|---|---|---|---|---|---|
| Example 1 | Graphite dispersed carbide | Porous silicon carbide | G | G | G | G |
| Comp. Ex. 1 | Soft carbon | Porous silicon carbide | P | P | G | G |
| Comp. Ex. 2 | Porous silicon carbide | Porous silicon carbide | G | G | G | P |
| Comp. Ex. 3 | Graphite dispersed silicon carbide | Graphite dispersed silicon carbide | G | G | P | G |

As shown in Table 6, Example 1 using a graphite (carbon) dispersed silicon carbide seal ring and a porous silicon carbide mating ring had good results in each of the silicate deposition resistance test, impurities surface roughening resistance test, squeaking test, and drying resistance test.

On the other hand, Comparative Example 1 using as the seal ring soft carbon was poor in durability (silicate deposition resistance test and impurities surface roughening resistance test), while Comparative Example 2 using as the seal ring porous silicon carbide was poor in drying resistance.

Further, Comparative Example 3 using as the seal ring and mating ring graphite dispersed silicon carbide was susceptible to squeaking. Note that from the results of Comparative Example 3, it could be confirmed that when using graphite dispersed silicon carbide for both of the seal ring and mating ring, squeaking occurred more easily and the effects of the present invention could not be obtained.

Therefore, from these results, it could be confirmed that by using in combination a graphite (carbon) dispersed silicon carbide seal ring and a porous silicon carbide mating ring, a mechanical seal device superior in durability and dry running wear resistance, preventing seizing and wear of the seal sliding element, and effectively suppressing squeaking at the time of sliding can be obtained.

**Claims**

1. A mechanical seal device for sealing a fluid by bringing a first seal sliding element (2) and a second seal sliding element (4) into abutment, wherein
said first seal sliding element (2) is a seal sliding element having silicon carbide as a substrate and containing carbon and
said second seal sliding element (4) is a seal sliding element containing silicon carbide as its main ingredient and having 5 to 200 μm size pores independently dispersed in it,
**characterised in that** said carbon is contained in said first seal sliding element (2) in a state dispersed in said silicon carbide substrate.

2. The mechanical seal device as set forth in claim 1, wherein said first seal sliding element (2) has an area ratio of carbon of 0.4 to 80%.

3. The mechanical seal device as set forth in any one of the preceding claims, wherein said first seal sliding element (2) has a content of carbon of 0.1 to 30 wt% with respect to said first seal sliding element (2) as a whole.

4. The mechanical seal device as set forth in any one of the preceding claims, wherein said carbon contains graphite as its main ingredient.

5. The mechanical seal device as set forth in any one of the preceding claims, wherein said first seal sliding element (2) has a Vicker's hardness of 300 to 3000 and an apparent specific gravity of 2.0 to 3.2.

6. The mechanical seal device as set forth in any one of the preceding claims, wherein said second seal sliding element (4) has a porosity of said pores of 3 to 20 vol%.

7. The mechanical seal device as set forth in any one of the preceding claims, wherein said second seal sliding element (4) has a Vicker's hardness of 2000 to 3000 and an apparent specific gravity of 2.7 to 3.2.

**Patentansprüche**

1. Mechanische Dichtungseinrichtung zur Abdichtung eines Fluids **dadurch**, daß ein erstes Gleitdichtungselement (2) und ein zweites Gleitdichtungselement (4) miteinander in Anlage gebracht werden, wobei
das erste Gleitdichtungselement (2) ein Gleitdichtungselement mit einem Substrat als Siliziumcarbid ist, das Kohlenstoff enthält, und
das zweite Gleitdichtungselement (4) ein Gleitdichtungselement ist, das Siliziumcarbid als Hauptbestandteil enthält und unabhängig darin dispergierte Poren mit einer Größe von 5 bis 200 μm aufweist,
**dadurch gekennzeichnet, daß** der Kohlenstoff in dem ersten Gleitdichtungselement (2) in einem in das Substrat aus Siliziumcarbid dispergierten Zustand enthalten ist.

2. Mechanische Dichtungseinrichtung nach Anspruch 1, bei der das erste Gleitdichtungselement (2) ein Kohlenstoff-Flächenverhältnis von 0,4 bis 80% hat.

3. Mechanische Dichtungseinrichtung nach einem der vorstehenden Ansprüche, bei der das erste Gleitdichtungselement (2) einen Kohlenstoffgehalt von 0,1 bis 30 Gew.% in Bezug auf das erste Gleitdichtungselement (2) insgesamt aufweist.

4. Mechanische Dichtungseinrichtung nach einem der vorstehenden Ansprüche, bei der der Kohlenstoff Graphit als Hauptbestandteil umfaßt.

5. Mechanische Dichtungseinrichtung nach einem der vorstehenden Ansprüche, bei der das erste Gleitdichtungselement (2) eine Vicker's-Härte von 300 bis 3000 und eine scheinbare spezifische Dichte von 2,0 bis 3,2 aufweist.

6. Mechanische Dichtungseinrichtung nach einem der vorstehenden Ansprüche, bei der das zweite Gleitdichtungseleinent (4) eine Porosität von 3 bis 20 % Porenvolumen aufweist.

7. Mechanische Dichtungseinrichtung nach einem der vorstehenden Ansprüche, bei der das zweite Gleitdichtungselement (4) eine Vickers's Härte von 2000 bis 3000 und eine scheinbare spezifische Dichte von 2,7 bis 3,2 aufweist.

**Revendications**

1. Joint d'étanchéité mécanique pour réaliser l'étanchéité d'un fluide en amenant un premier élément coulissant de joint d'étanchéité (2) et un second élément coulissant de joint d'étanchéité (4) en butée, dans lequel :

   ledit premier élément coulissant de joint d'étanchéité (2) et un élément coulissant de joint d'étanchéité ayant du carbure de silicium en tant que substrat et contenant du carbone, et
   ledit second élément coulissant de joint d'étanchéité (4) est un élément coulissant de joint d'étanchéité contenant du carbure de silicium en tant que son ingrédient principal et ayant des pores d'une taille de 5 à 200 $\mu$m dispersés de manière indépendante dans celui-ci,
   **caractérisé en ce que** ledit carbone est contenu dans ledit premier élément coulissant de joint d'étanchéité (2) dans un état dispersé dans ledit substrat de carbure de silicium.

2. Joint d'étanchéité mécanique selon la revendication 1, dans lequel ledit premier élément coulissant de joint d'étanchéité (2) a un rapport de surface de carbone de 0,4 à 80 %.

3. Joint d'étanchéité mécanique selon l'une quelconque des revendications précédentes, dans lequel ledit premier élément coulissant de joint d'étanchéité (2) a une teneur en carbone de 0,1 à 30 % en poids par rapport audit premier élément coulissant de joint d'étanchéité (2) dans son ensemble.

4. Joint d'étanchéité mécanique selon l'une quelconque des revendications précédentes, dans lequel ledit carbone contient du graphite en tant que son ingrédient principal.

5. Joint d'étanchéité mécanique selon l'une quelconque des revendications précédentes, dans lequel ledit premier élément coulissant de joint d'étanchéité (2) a une dureté Vicker de 300 à 3000 et une densité apparente de 2,0 à 3,2.

6. Joint d'étanchéité mécanique selon l'une quelconque des revendications précédentes, dans lequel ledit second élément coulissant de joint d'étanchéité (4) a une porosité desdits pores de 3 à 20 % en volume.

7. Joint d'étanchéité mécanique selon l'une quelconque des revendications precédentes, dans lequel ledit second élément coulissant de joint d'étanchéité (4) a une dureté Vicker de 2000 à 3000 et une densité apparente de 2,7 à 3,2.

# FIG. 1

# FIG. 2

AREA OF RINGING (SLIDING NOISE)

○ NO SQUEAKING
× SQUEAKING

EP 1 630 463 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5069066 B
- US 5707065 A
- US 2002074744 A1
- US 2002074728 A1